# EUROPEAN PATENT APPLICATION

(11) **EP 1 617 574 A1**
(43) Date of publication of application: **18.01.2006**
(21) Application number: 04726918.8
(22) Date of filing: 12.04.2004
(51) Int. Cl.: H04B 7/26

(54) **RADIO COMMUNICATION SYSTEM**

(30) Priority: 11.04.2003 JP 2003107879
(71) Applicant: SHARP KABUSHIKI KAISHA, Osaka-shi, Osaka 545-8522 (JP)
(72) Inventor: OH, Waho, 2610023 (JP)
(74) Representative: Müller - Hoffmann & Partner
(86) International application number: PCT/JP2004/005210
(87) International publication number: WO 2004/093348

(57) **Abstract**

The system includes: a first mobile communication terminal (100) (e.g., portable information terminal) having one or more first wireless LAN interfaces (30, 31) of wireless LAN client function; and a second mobile communication terminal (200) (e. g. , cellular phone) having a second wireless LAN interface (18, 19) having a wireless LAN access point or wireless LAN client function. When the user is in a wireless LAN hotspot area (32), the user makes wireless LAN access using the first mobile communication terminal (100). When the user is located at the boundary of the wireless LAN hotspot area (32), wireless access is kept automatically by way of the second mobile communication terminal (200). In this way, it is possible to enjoy the merits of both the mobile communication system and the wireless LAN system.

## Description

### Technical Field

The present invention relates a wireless communication system including: a first mobile communication terminal (e. g. , portable information terminal) having one or more wireless LAN interfaces providing wireless LAN client function; and a second mobile communication terminal (e.g., cellular phone) having a wireless LAN interface providing the function of a wireless LAN access point or wireless LAN client function.

### Background Art

There have been wide area coverage data communication services of some hundreds kilo bps, using a mobile communication system such as W-CDMA (Wideband Code Division Multiple Access), GSM (Global System for Mobile Communications), GPRS (General Packet Radio Service), cdma2000 or the like.

There also have been high-speed local area coverage data communication services of some tens Mbps, using wireless LAN systems composing of multiple hotspots areas provided by wireless LAN access points (APs).

In using a wireless LAN system, in most cases, portable information terminals such as notebook PCs and PDAs (Personal Digital Assistant) having a wireless LAN adapter provided with wireless LAN client function, e.g., card type wireless LAN adapters, including PCMCIA (Personal Computer Memory Card International Association) card, CF (Compact Flash) card, SD (Secure Digital) card and the like, or portable information terminals with a built-in wireless LAN function are used. In a wireless LAN hotspot area, a portable information terminal with a wireless LAN interface is used to access the internet or perform e-mail transmission and reception.

On the other hand, in using a mobile communication system, mobile terminals capable of accessing the mobile communication system, e.g., W-CDMA cellular phone, PHS data communication card, etc., are used to make wireless access for voice communications and data communications.

Since, however, the mobile communication system and the wireless LAN system are available in only an independent manner, under the existing circumstances the user should make use of different wireless communication systems by handling different wireless communication terminals.

As the prior art relating to linkage of a cellular phone with a portable information terminal, connections between a cellular phone and a portable information terminal using cables, infrared, or Bluetooth technology are known (see Japanese Patent Application Laid-open Hei 10-56673, Japanese Patent Application Laid-open Hei 10-285203, and Japanese Patent Application Laid-open 2001-103568, for example).

Now, comparing the service of the mobile communication system of W-CDMA or the like with that of a wireless LAN system, both have some merits and demerits. Specifically, the mobile communication system has the merits of providing wide service area and also supporting high-speed travel but has the demerits of a high basic rate and being charged based on traffic usage, causing disadvantage in downloading bulky data such as motion pictures, music, etc.

On the other hand, a wireless LAN system has the advantage of realizing high speed data communication and the capability of using the service at a low cost or at a fixed price because the system architecture is simple. However, it also has the disadvantage of using a high frequency band with the necessity of a great amount of frequency resource (bandwidth) in order to realize high-speed data communication and the disadvantage of a limited or local service area (e.g., about some hundreds meters in a hotspot).

With the development of enlargement of the coverage areas of mobile communication services based on W-CDMA technology and others and enlargement of wireless LAN hotspot areas as well as the spread of inexpensive mobile terminals, many users have come to own both the W-CDMA cellular phone and the portable information terminal having a wireless LAN interface in order to enjoy the merits of both of the wireless communication systems. Under these circumstances, there has been a demand for development of a device which can make the switch (handover) between the different mobile communication systems by making use of wireless LAN interfaces provided for mobile terminals, in order to put both the wireless communication systems to sufficient use.

In sum, achievement of a high-speed, inexpensive wireless LAN service using a portable information terminal having a wireless LAN interface for a limited, wireless LAN access point area, installed at home, in an office, public area or the like, is wanted while provision of a wireless access environment that enables continuous internet access and e-mail transmission and reception using a W-CDMA cellular phone is desired when the user is out of the wireless LAN service area.

The present invention has been devised in view of the above circumstances, it is therefore an object of the present invention to provide a wireless communication system which can enj oy the merits of both of the mobile communication system and the wireless LAN system.

### Disclosure of Invention

The wireless communication system according to the present invention includes: a wireless LAN access point connected to a public wireless access network; a first mobile communication terminal connectable to the wireless LAN access point and having a first wireless LAN interface; and a second mobile communication terminal connectable to the public wireless access network, connectable to the first mobile communication terminal by way of the first wireless LAN interface and having a second wireless LAN interface, and is characterized in that the first mobile communication terminal includes: a communication status detecting means that detects the strength of the received signal from the wireless LAN access point and/or the status of communication with the wireless LAN access point; a connection request transmitting means for transmitting a connection request signal to the second mobile communication terminal by way of the wireless LAN access point and the public wireless access network when the communication status detecting means recognizes the necessity of connection to the second mobile communication terminal by way of the first wireless LAN interface and the second wireless LAN interface; and a wireless LAN connection switching means for establishing connection to the second wireless LAN interface of the second mobile communication terminal when the communication status detecting means determines that communication with the second mobile communication terminal by way of the second wireless LAN interface will be permitted, and the second mobile communication terminal includes: a connection request receiving means for receiving the connection request signal; and a base station connecting means which establishes connection to the public wireless access network and validates the second wireless LAN interface upon reception of the connection request signal, so as to enable its connection with the first mobile communication terminal by way of the first wireless LAN interface and the second wireless LAN interface.

With this configuration, in the case where the first mobile communication terminal resides in the mobile communication system service area and is also located in a wireless LAN hotspot area, if it is determined by the communication status detecting means that the first mobile communication terminal has been in communication with the wireless LAN access point and needs to be connected to the second mobile communication terminal by way of the first wireless LAN interface and the second wireless LAN interface, the connection request transmitting means transmits a connection request signal to the second mobile communication terminal via the wireless LAN access point.

The wireless LAN switching means of the first mobile communication terminal determines the signal strength of each of the wireless LAN signals detected by the communication status detecting means, and establishes connection to the wireless LAN access point offering the maximum signal strength. The secondmobile communication terminal receives a connection request signal from the first mobile communication terminal, by the connection request receiving means. When the signal is recognized as the connection request signal from the first mobile communication terminal, the second terminal establishes wireless connection to the base station and makes the second wireless LAN interface active so as to enable connection from the first wireless LAN interface.

Further, the first mobile communication terminal causes the wireless LAN switching means to switch its connection with the wireless LAN hotspot into connection to the second mobile communication terminal by way of the first wireless LAN interface and the second wireless LAN interface, so as to continuously keep the user's wireless access via the base station.

In the above wireless communication system, the second wireless LAN interface of the second mobile communication terminal has a wireless LAN access point or wireless LAN client function, and when the communication status detecting means determines that the first mobile communication terminal can be connected by means of the wireless LAN access point or wireless LAN client function of the second mobile communication terminal, the wireless LAN connection switching means establishes connection to the wireless LAN access point or wireless LAN client function of the second mobile communication terminal, in infrastructure mode or in ad hoc mode.

With the above arrangement, the second mobile communication terminal can be connected to multiple first mobile communication terminals in one-to-one manner in ad hoc mode and can also be connected to multiple first mobile communication terminals simultaneously in infrastructure mode.

### Brief Description of Drawings

FIG. 1 is a schematic diagram showing a wireless communication system configuration according to the embodiment of the present invention.
FIG. 2 is a schematic diagram showing a wireless communication system configuration according to the embodiment of the present invention.
FIG. 3 is a block diagram showing a configuration of a first mobile communication terminal according to the embodiment of the present invention.
FIG. 4 is a block diagram showing a configuration of a second mobile communication terminal according to the embodiment of the present invention.
FIG. 5 is a block diagram showing another configuration of a second mobile communication terminal according to the embodiment of the present invention.
FIG. 6 is a schematic view showing a case where the wireless communication system according to the embodiment of the present invention is used in infrastructure mode.
FIG. 7 is a flowchart showing operation in the first mobile communication terminal according to the embodiment of the present invention.
FIG. 8 is a flowchart showing operation in the second mobile communication terminal according to the embodiment of the present invention.

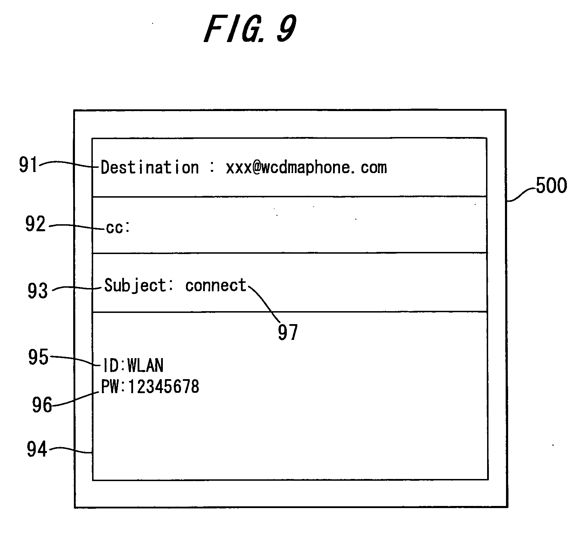

FIG. 9 is a diagram showing a configuration of a connection request signal used in the wireless communication system according to the embodiment of the present invention.

### Best Mode for Carrying Out the Invention

The embodiment of the wireless communication system according to the present invention will be described next with reference to the drawings.

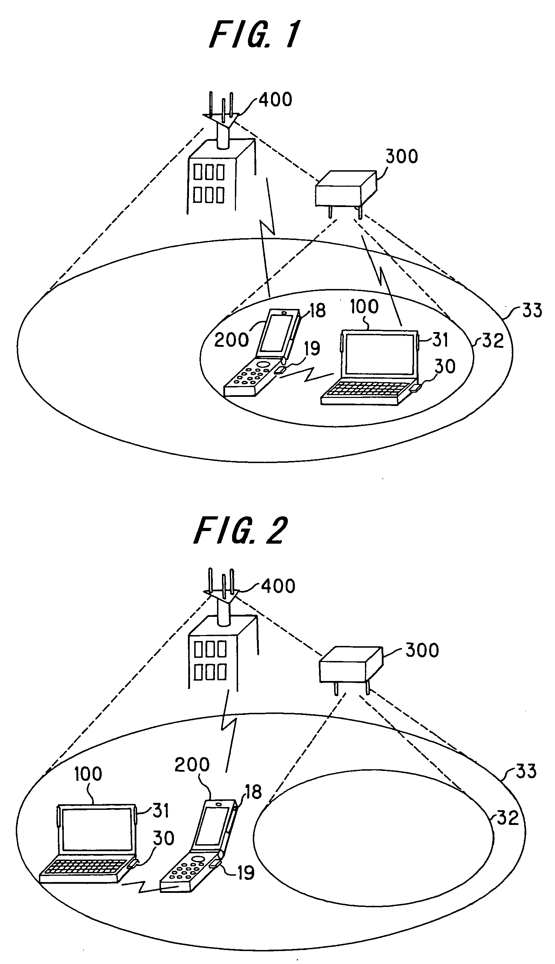

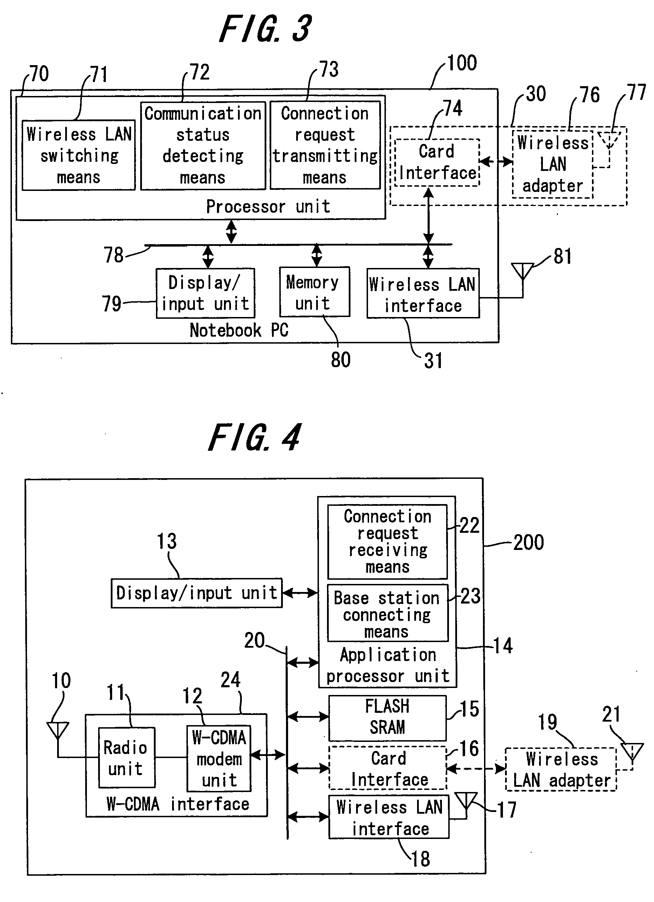

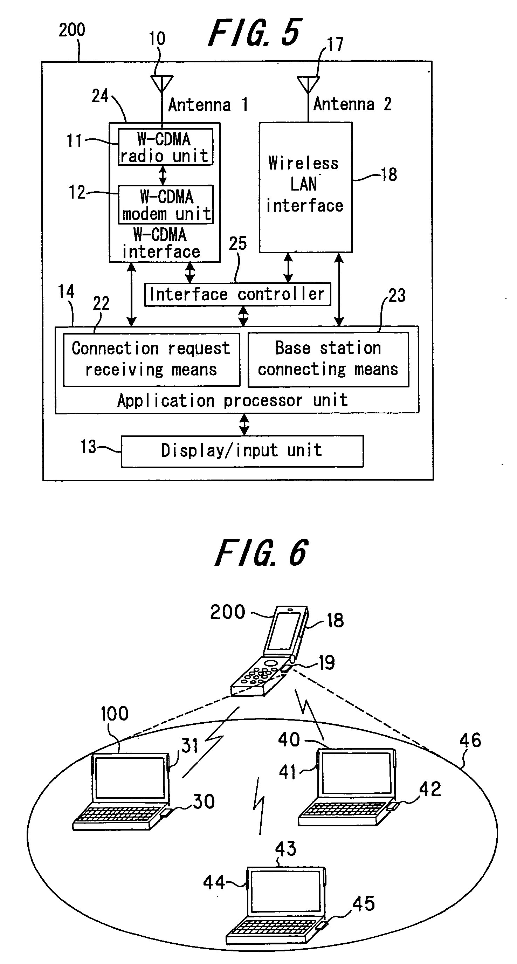

FIGS. 1 and 2 are schematic diagrams showing a configuration of the wireless communication system in accordance with the embodiment of the present invention. FIG. 3 is a block diagram showing a configuration of a first mobile communication terminal; FIG. 4 is block diagram showing a configuration of a second mobile communication terminal; and FIG. 5 is a block diagram showing another configuration of a second mobile communication terminal.

A first mobile communication terminal 100 is a portable information terminal having a first wireless LAN interface. Specific examples include notebook PCs, handheld PCs, PDAs and the like.

A second mobile communication terminal 200 is a cellular phone having a second wireless LAN interface. As a specific example, use can be made of a W-CDMA cellular phone using the W-CDMA (wideband code division multiple access) mobile communication system or wide-area wireless communication system, which can provide a service for wide area coverage at the maximum data transfer rate of 384 kbps outdoors, and supports high-speed travel such as in a car, bullet train, etc., and is charged based on the time or amount of data communication.

Here, the second mobile communication terminal 200 is not limited only to the cellular phones that support the W-CDMA mobile communication system but, cellular phones that support another digital mobile communication system such as, for example, GPRS (General Packet Radio Service), cdma2000, HSDPA (High Speed Downlink Packet Access) or the like, can be used.

The first wireless LAN interface provided for first mobile communication terminal 100 and the second wireless LAN interface for second mobile communication terminal 200 may employ wireless LAN interfaces for wireless local area network systems that, based on the IEEE (IEEE: the Institute of Electrical and Electronics Engineers, Inc.,) 802.11b, IEEE802.11a and IEEE802.11g standards, can provide a service for local area coverage at the maximum data transfer rate of 54 Mbps, and deal with low-speed movement, i.e., standing still or walking around, and is charged at a low price or at a fixed sum. Here, the local area coverage means that the service area is limited discretely or to a spot.

It should be noted that the first wireless LAN interface and second wireless LAN interface are not limited to the wireless LAN interfaces based on the IEEE802.11b, IEEE802.11a and IEEE802.11g standards, but use can also be made of wireless LAN interfaces supporting other high-speed wireless systems such as, for example, UWB(Ultra Wide Band), the next-generation wireless LAN systems exceeding 200 Mbps, and IEEE802.11h, IEEE802.11i, IEEE802.11j, etc.

First mobile communication terminal 100 is mainly composed of a processor unit 70, a display/input unit 79, a memory unit 80 and a first wireless LAN interface 31, each component being connected to a bus 78, as shown in FIG. 3.

The first wireless LNA interface 31 used here is a built-in PC wireless LAN interface, and performs signal transmission and reception using an antenna 81. Processor unit 70 is provided with driver software for first wireless LAN interface 31 and application software. The driver software of first wireless LAN interface 31 or application software constitutes a communication status detecting means 72 for detecting the received signal strength(s) and communication status of a wireless LAN hotspot area 32 (or multiple hotspot areas) of a wireless LAN access point(s) 300, a connection request transmitting means 73 for sending a signal for requesting connection to the second mobile communication terminal 200 and a wireless LAN switching means 71 for making a switch (handover) from one wireless LAN spot to another.

Here, first wireless LAN interface 31 may also be constituted of a card interface 74, e.g., PCMCIA card, CF card, SD card, etc., and a card-type wireless LAN adapter 76 (indicated at 30 in FIGS. 1 and 2), instead of a built-in PC first wireless LAN interface. In this case, wireless LAN adapter 76 performs signal transmission and reception via an antenna 77.

Second mobile communication terminal 200 is composed of, as shown in FIG. 4, a W-CDMA antenna unit 10, a W-CDMA radio unit 11, a W-CDMA modem unit 12, an application processor unit 14, a display/input unit 13, a memory unit 15 and a second wireless LAN interface 18. The second wireless LAN interface 18 performs signal transmission and reception via a wireless LAN interface antenna 17.

Further, the driver software or application software in application processor unit 14 constitutes a connection request receiving means 22 for receiving a connection request signal sent from connection request transmitting means 73 of the first mobile communication terminal and a base station connecting means 23 for establishing wireless connection with a base station in accordance with the connection request verified by connection request receiving means 22.

Second wireless LAN interface 18 may be also be composed of a card interface 16 and a card-type wireless LAN adapter 19, instead of the built-in second wireless LAN interface 18 that is directly connected to bus 20.

For card interface unit 16 and card type wireless LAN adapter 19, a card interface such as SD card, PC card, PCMCIA card, CF card, etc., and a wireless LAN adapter supporting corresponding card interface, may be used. Further, as the built-in second wireless LAN interface 18 a wireless LAN interface providing wireless LAN access point function or client function may also be employed.

Second mobile communication terminal 200 may also be constituted of a dual-mode mobile communication terminal having W-CDMA/wireless LAN interfaces, as shown in FIG. 5. That is, the dual mode mobile communication terminal (second mobile communication terminal 200) having W-CDMA/wireless LAN interfaces, shown in FIG. 5 is adapted to be a mobile communication terminal that establishes connection to each wireless system by way of the corresponding wireless interface, and makes a switch (handover) of communication between the wireless systems, based on the status.

In the second mobile communication terminal 200 shown in FIG. 5, an interface controller 25 is a controller that performs mode switching, that is, performs on-off control of a W-CDMA interface 24 and second wireless LAN interface 18. Here, W-CDMA interface 24 is composed of a W-CDMA antenna unit 10, W-CDMA radio unit 11 and a W-CDMA modem unit 12.

Application processor unit 14 performs transmission/reception data processes for each mode and switches transmission/reception data between W-CDMA and wireless LAN interfaces, to realize the function of a dual mode mobile communication terminal.

Further, the function of second mobile communication terminal 200 is realized by processing, converting and transferring data between W-CDMA interface 24 and second wireless LAN interface 18. Similarly, the driver software or application software in application processor unit 14 may be provided with the function of connection request receiving means 22 for receiving a connection request signal sent from a first mobile communication terminal by connection request transmitting means 73, and the function of base station connecting means 23 for establishing a wireless connection to a base station in accordance with the connection request verified by connection request receiving means 22.

Referring to FIG. 3, the flow of signals in the first wireless LAN interface 31 in the first mobile communication terminal will be described.

The signal transmitted from wireless LAN access point 300 is received by antenna 81, and sent to processor unit 70 via first wireless LAN interface 31. The signal is data processed and converted by the wireless LAN interface driver software and application software provided for processor unit 70 and is displayed on display/input unit 79.

Data to be transmitted, such as a user's request, e-mail etc., is data processed and converted by the wireless LAN interface driver software and application software provided for processor unit 70 and is transmitted to wireless LAN access point 300 by way of first wireless LAN interface 31 and antenna 81.

Referring to FIGS. 4 and 5, the flow of signals with regard to W-CDMA interface 24 in the second mobile communication terminal will be described.

The downstream signal from base station 400 (see FIG. 1) is converted into I and Q-phase, orthogonal base band signals, through W-CDMA antenna unit 10 and W-CDMA radio unit 11, and the signals are input to W-CDMA modem unit 12. W-CDMA modem unit 12 performs W-CDMA signal demodulation, communication protocol processing and other processes.

The demodulated information data is transferred through bus 20 to application processor unit 14 where it is processed. The information data generated by application processor unit 14 is input to W-CDMA modem unit 12, where it is converted into I and Q-phase orthogonal baseband signals, which in turn are input to W-CDMA radio unit 11.

W-CDMA radio unit 11 converts the input I and Q-phase orthogonal baseband signals into a high-frequency radio signal of a predetermined channel, and transmits it as a upstream signal to base station 400 (see FIG. 1) via W-CDMA antenna unit 10.

Application processor unit 14 processes various kinds of data such as voice, image, e-mail, internet access data and other data, so that the application software can provide various W-CDMA mobile communication functions to the user.

Referring to FIGS. 4 and 5, signal flow with regard to second wireless LAN interface 18 in the second mobile communication terminal will be described.

The W-CDMA received signal, which has been processed and converted by application processor unit 14, is supplied to second wireless LAN interface 18, and is transmitted to first mobile communication terminal 100 through wireless LAN interface antenna 17. On the other hand, the signal from first mobile communication terminal 100 is received by second wireless LAN interface 18 and is processed and converted by application processor unit 14 and supplied to W-CDMA interface 24.

Referring to FIGS. 1 and 2, the wireless communication system according to the embodiment of the present invention will be described in further detail.

The wireless communication system according to the embodiment of the present invention includes: as shown in FIGS. 1 and 2, the first wireless system composed of one or multiple wireless LAN access points 300, installed at home, at an office, at a public area or any other site, a local, wireless LAN service area (wireless LAN hotspot area 32) provided by one or multiple hotspots and a first mobile communication terminal 100; and the second wireless system composed of a wide area coverage, mobile communication service area 33 based on W-CDMA system, constituted by multiple base stations 400 and a second wireless communication terminal 200.

Next, switching between the wireless systems will be described.

When, as shown in FIG. 1, first mobile communication terminal 100 and second mobile communication terminal 200 reside both in wireless LAN hotspot area 32 and in W-CDMA mobile communication service area 33, the user is able to establish connection to wireless LAN access point 300 using first mobile communication terminal 100 to make wireless access to the internet or for e-mail reception and transmission and other wireless access.

First mobile communication terminal 100, using communication status detecting means 72 that is built in the wireless LAN interface driver software or application software, detects the received signal strength of wireless LAN hotspot area 32, and also detects the communication status with wireless LAN access point 300, such as the average transmission and reception packet amounts and average transmission and reception data rates. Based on the detection of the received signal strength, first mobile communication terminal 100 checks whether the terminal resides at the boundary of wireless LAN hotspot area 32. It is also checked based on the detection of the communication status whether first mobile communication terminal 100 is busy, in communication, or in an idle state (in which the terminal is not used by the user or no wireless access has been made for a time longer than a predetermined period of time).

If the terminal is determined to be located at the boundary of wireless LAN hotspot area 32 due to user's movement and if there is another wireless LAN hotpot area around the current location, first mobile communication terminal 100 makes a handover between the hotspots, using wireless LAN switching means 71 that is built in the wireless LAN interface driver software or application software, so as to enable the user to make continuous wireless access.

On the other hand, if the terminal is determined to be located at the boundary of wireless LAN hotspot area 32 due to user's movement and if there is no wireless LAN hotpot area around the current location, wireless access of first mobile communication terminal 100 is wanted to be made to continue by making the first mobile communication terminal 100 operate with the second mobile communication terminal 200 owned by the user. In this case, first mobile communication terminal 100, using connection request transmitting means 73 that is built in the wireless LAN interface driver software or application software, transmits a connection request signal that indicates continuation of the wireless access through second wireless LAN interface 18, to second wireless communication terminal 200, by way of wireless LAN access point 300.

Second wireless communication terminal 200 receives a connection request signal sent from first mobile communication terminal 100, using connection request receiving means 22 that is built in the wireless LAN interface driver software or application software of application processor unit 14, and analyzes the received signal and checks and verifies it. This process is done by, for example, analyzing and checking the format of the connection request signal, and verifying the user name and password contained in the connection request signal.

When the signal is determined to be the connection request signal from first mobile communication terminal 100, the second terminal, using base station connecting means 23 that is built in the driver software or application software of application processor unit 14, establishes wireless connection (calling) to base station 400 by way of W-CDMA interface 24. For example, connection is made to the predetermined internet service provider (ISP) or the in-house intranet, by circuit switching (CS) or packet switching (PS) .

At the same time, second wireless LAN interface 18 is activated to provide a wireless LAN access point or wireless LAN client function to first mobile communication terminal 100.

Having transmitted a request signal for connection to second mobile communication terminal 200 by means of connection request transmitting means 73, first mobile communication terminal 100 continues detecting the signal strength of wireless LAN access point 300, other nearby access points and second wireless LAN interface 18 of second mobile communication terminal 200, by means of communication status detecting means 72.

When the signal strength of second wireless LAN interface 18 of second mobile communication terminal 200 is greater than that of wireless LAN access point 300 and other nearby access points, first mobile communication terminal 100, using wireless LAN switching means 71 built in the wireless LAN interface driver software or application software, makes a switch (handover) between wireless LAN access point 300 and second wireless LAN interface 18 of second mobile communication terminal 200, thus making it possible to provide continuous wireless access to the user even if the user goes away from wireless LAN hotspot area 32, as shown in FIG. 2.

When second wireless LAN interface 18 of the secondmobile communication terminal 200 has an access point function as shown in FIG. 6, it is possible to provide infrastructure mode operation in which the terminal 200 is able tomake wireless access to first mobile communication terminals 100, 40 and 43, at the same time. When second wireless LAN interface 18 has a client function, it is possible to provide ad hoc mode in which the terminal 200 is able to make wireless access to each of first mobile communication terminals 100, 40 and 43, separately.

Here, in FIG. 6, reference numerals 100, 40 and 43 indicate first mobile communication terminals, reference numerals 31, 41 and 44 indicate first wireless LAN interfaces built in the terminals, and reference numerals 30, 42 and 45 indicate card-type first wireless LAN interfaces.

Communication status detecting means 72 is built in the wireless LAN interface driver software or application software of first mobile communication terminal 100, including the two functions of detecting signal strength and communication status.

Signal strength detection is performed by detecting the signal strength of wireless LAN access point 300, other nearby access points and second wireless LAN interface 18 of second mobile communication terminal 200, by the received signal strength detecting circuit of the radio unit of the first LAN interface 31, for example, RSSI (Received Signal Strength Indicator), and the detected RSSI values of all the wireless LAN signals are reported to processor unit 70.

Communication status detecting means 72 determines the communication status, i.e., whether first mobile communication terminal 100 is busy with communication or in an idle state (in which the terminal is not used by the user or no wireless access has been made for a time longer than a predetermined period of time), by calculating the data transfer rates of transmission and reception between terminals, at intervals of a fixed time, based on statistics of transmitted and received data amounts or the transmitted and received packet amounts.

Connection request transmitting means 73 is built in the wireless LAN interface driver software or application software of first mobile communication terminal 100, and determines the signal strength and communication status of the wireless LANs detected by communication status detecting means 72. When the terminal is determined to be located at the boundary of LAN hotspot area 32 of wireless LAN access point 300, and if there is no access point nearby and if the communication status is determined not to be idle, the terminal transmits a connection request signal to second mobile communication terminal 200 by way of wireless LAN access point 300.

As the connection request signal, an e-mail function for transmitting an e-mail 500 of a fixed text format, for example may be used. E-mail 500 of a fixed text format is composed of a destination 91, a carbon copy (CC) 92, a subject 93 and body text 94.

As destination 91, the e-mail address of the secondmobile communication terminal 200, for example "xxx@wcdmaphone.co.jp" may be used. Carbon copy 92 is filled in with a destination for simultaneous transmission, for example, the e-mail address to first mobile communication terminal 100. Subject 93 may be filled in with a keyword 97 that represents a connection request signal predefined with the second mobile communication terminal, for example "connect". Body text 94 may be filled in with an user ID 95 (Identification), e.g., WLAN, and a pass word 96 (PW), e. g. , "12345678" of first mobile communication terminal 100, which have been previously registered in secondmobile communication terminal 200.

It will be understood that another method can be used as long as it can identify the connection request signal; for example, the keyword 97 that represents a connection request signal predefined with the secondmobile communication terminal 200 may be filled in body text 94 with subject 93 left blank. Alternatively, body text 94 may be left blank as long as keyword 97 is transmitted. Further, keyword 97, user ID 95 and password 96 may be transmitted as body text 94 while subject 93 is left blank. As user ID 95 and password 96, SSID(service Set ID) and WEP (Wired Equivalent Privacy) used for wireless LAN interface 31 of first mobile communication terminal 100 may be used. It is also possible that connection request transmitting means 73 may use Short Message (SM) or the like, other than the function of e-mail transmission.

Connection request receiving means 22 is built in the wireless LAN interface driver software or application software of second mobile communication terminal 200, and receives a connection request signal sent from connection request transmitting means 73 of first mobile communication terminal 100, detects keyword 97 of a predetermined title and verifies user ID 95 and password 96 to determine whether the connection request signal is one that has been sent from first mobile communication terminal 100.

Base station connecting means 23 is built in the wireless LAN interface driver software or application software of second mobile communication terminal 200, and establishes wireless connection (calling) to base station 400 by way of W-CDMA interface 24 when connection request receiving means 22 has verified that the signal is a connection request signal from first mobile communication terminal 100.

For example, connection is made to the predetermined internet service provider (ISP) or the in-house intranet, by circuit switching (CS) or packet switching (PS). At the same time, second wireless LAN interface 18 is activated to provide a wireless LAN access point or wireless LAN client function to second mobile communication terminal 200.

Wireless LAN switching means 71 is built in the wireless LAN interface driver software or application software of first mobile communication terminal 100, and detects the signal strength of wireless LAN access point 300, the signal strength of other nearby access points and the signal strength of second wireless LAN interface 18 of second mobile communication terminal 200 by communication status detecting means 72. When the signal strength of second wireless LAN interface 18 of second mobile communication terminal 200 is the greatest, the first mobile communication terminal 100 establishes connection in infrastructure mode or in ad hoc mode to second mobile communication terminal 200 by means of first wireless LAN interface 31.

In this case, automatic connection software that is built in the wireless LAN interface driver software or application software of first mobile communication terminal 100, or the wireless LAN support function and wireless LAN setup utility of Windows (R) XP may be made use of for automatic connection and automatic mode-select function.

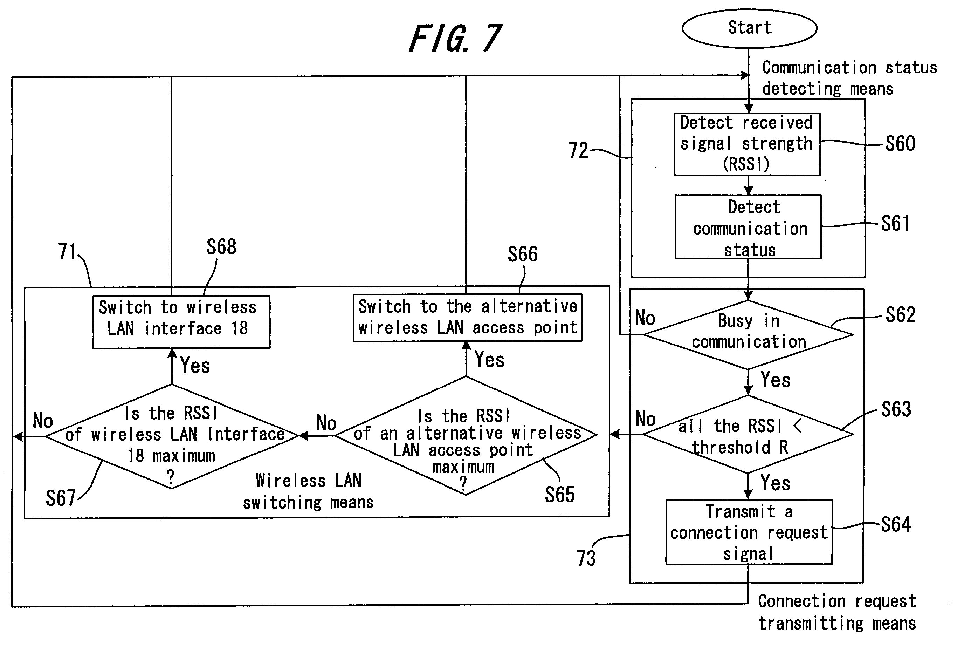

Referring next to FIG. 7, the operation in first mobile communication terminal 100 will be described.

First mobile communication terminal 100 detects the received signal strength of each wireless LAN signal (S60) and also the communication status (S61) , using communication status detecting means 72, and offers the detected signal strength and transmission and reception data rate values of each wireless LAN signal to connection request transmitting means 73. In the connection request transmitting means 73 it is judged whether the terminal is busy in communication (S62). If the terminal is idle, the operation returns to the step at communication status detecting means 72. If the terminal is not idle, the signal strength of each of the detected wireless LAN signals is compared to a threshold R (S63).

Here, if all the detected signals are lower in received signal strength than threshold R, it is judged that the first mobile communication terminal 100 is located at the boundary of wireless LAN hotspot area 32 of wireless LAN access point 300 while the terminal cannot be connected to any other wireless LAN hotspot, so that the terminal sends out a connection request signal (S64).

If any of the detected signals has a greater received signal strength than threshold R, all the signal strength values of the detected wireless LAN signals are handed over to wireless LAN switching means 71. In wireless LAN switching means 71 extracts the maximum received signal strength and checks whether the maximum signal is that from an alternative wireless LAN access point (S65). Here, if the signal strength of an alternative wireless LAN access point is maximum, it is determined that there is another wireless LAN access point adjacent to the wireless LAN access point 300 that is currently engaged in communication, so the terminal switches its connection to the alternative wireless LAN access point (S66).

If the signal strength of an alternative wireless LAN access point is not maximum, it is judged whether the signal strength of second wireless LAN interface 18 of second mobile communication terminal 200 is maximum (S67). Here, if the signal strength of second wireless LAN interface 18 of second mobile communication terminal 200 is maximum, it is determined that the second wireless LAN interface 18 of second mobile communication terminal 200 is active by connection request receiving means 22 and base station connecting means 23, so the first terminal switches its connection to the second wireless LAN interface 18 of second wireless communication terminal 200 (S68).

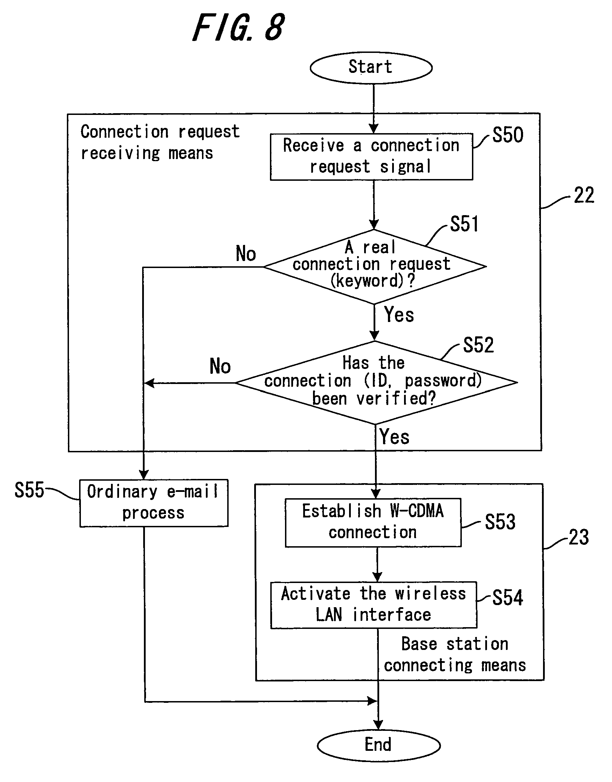

Referring next to FIG. 8, the operation of second mobile communication terminal 200 will be described.

Connection request receiving means 22 of second mobile communication terminal 200 receives a connection request signal sent from connection request transmitting means 73 of first mobile communication terminal 100 (S50), and judges whether the received signal is a connection request (S51) based on keyword 97 and verifies the connection request based on user ID 95 and password 96 (S52).

Here, when the received signal has been confirmed to be a connection request from first mobile communication terminal 100, base station connecting means 23 establishes wireless connection to base station 400 (S53) and the second wireless LAN interface 18 offers the function of a wireless LAN access point or the function of wireless LAN client to the second mobile communication terminal 200 (S54). When the received signal is not determined to be a connection request from the first mobile communication terminal 100, or when the connection request is unverified, the signal is processed as a normal e-mail (S55).

As described heretofore, according to the wireless communication system according to the present invention, when the user is in a wireless LAN hotspot area, the user is able to make easy access to the wireless LAN, using the firs mobile communication terminal. When the user resides at the boundary of a wireless LAN hotspot area, the user is able to keep continuous wireless access, automatically by way of the second mobile communication terminal. Therefore, this system is able to offer an optimal service to the user, taking advantage of both the wireless LAN's merit of high-speed and low-price and the mobile communication system's merit of wide area coverage.

Further, the wireless communication system according to the present invention is not only suitable for mere one-to-one personal use, but can also be used in ad hoc mode in which multiple users with first mobile communication terminals can make connection to one another in a company, office, conference room or at home, for example, and in infrastructure mode in which a multiple number of first mobile communication terminals make connection at the same time. In this way, it is possible to provide various usage environments depending on user demands.

### Industrial Applicability

According to the wireless communication system according to the present invention, when the user is in a wireless LAN hotspot area, the user is able to make easy access to the wireless LAN, using the first mobile communication terminal. When the user resides at the boundary of a wireless LAN hotspot area, the user is able to keep continuous wireless access, automatically by way of the second mobile communication terminal. Therefore, the system of the invention is suitable to be applied to a system that is able to offer an optimal service to the user, taking advantage of both the wireless LAN's merit of high-speed and low-price and the mobile communication system's merit of wide area coverage.

## Claims

1. A wireless communication system comprising:
a wireless LAN access point connected to a public wireless access network;
a first mobile communication terminal connectable to the wireless LAN access point and having a first wireless LAN interface; and
a second mobile communication terminal connectable to the public wireless access network, connectable to the first mobile communication terminal by way of the first wireless LAN interface and having a second wireless LAN interface,
**characterized in that**
the first mobile communication terminal includes:
a communication status detecting means that detects the strength of the received signal from the wireless LAN access point and/or the status of communication with the wireless LAN access point;
a connection request transmittingmeans for transmitting a connection request signal to the second mobile communication terminal by way of the wireless LAN access point and the public wireless access network when the communication status detecting means recognizes the necessity of connection to the second mobile communication terminal by way of the first wireless LAN interface and the second wireless LAN interface; and
a wireless LAN connection switching means for establishing connection to the second wireless LAN interface of the second mobile communication terminal when the communication status detecting means determines that communication with the second mobile communication terminal by way of the second wireless LAN interface will be permitted, and
the second mobile communication terminal includes:
a connection request receiving means for receiving the connection request signal; and
a base station connecting means which establishes connection to the public wireless access network and validates the second wireless LAN interface upon reception of the connection request signal, so as to enable its connection with the first mobile communication terminal by way of the first wireless LAN interface and the second wireless LAN interface.

2. The wireless communication system according to Claim 1, wherein the second wireless LAN interface of the second mobile communication terminal has a wireless LAN access point or wireless LAN client function, and
when the communication status detecting means determines that the first mobile communication terminal can be connected by means of the wireless LAN access point or wireless LAN client function of the second mobile communication terminal, the wireless LAN connection switching means establishes connection to the wireless LAN access point or wireless LAN client function of the second mobile communication terminal, in infrastructure mode or in ad hoc mode.
